# EUROPEAN PATENT SPECIFICATION

(11) **EP 3 780 011 B1**
(45) Date of publication and mention of the grant of the patent: **13.09.2023**
(21) Application number: 19192170.9
(22) Date of filing: 16.08.2019
(51) Int. Cl.: H01B 7/00, H01B 11/00, G01B 7/02

(54) **MULTIFUNCTIONAL ELECTRIC CABLE**
MULTIFUNKTIONALES STROMKABEL
CÂBLE ÉLECTRIQUE MULTIFONCTIONNEL

(43) Date of publication of application: 17.02.2021
(73) Proprietor: GammaSwiss SA, 1400 Yverdon-les-Bains (CH)
(72) Inventor: Strupinskiy, Michael, 1134 Budapest 13 (HU)
(74) Representative: reuteler & cie SA

(56) References cited:
- CN-U- 202 770 387
- CN-U- 203 422 980
- DE-A1- 3 635 518
- RU-U1- 186 328
- US-A1- 2018 220 494

## Description

### Field of the Invention

The present invention relates to a measurement setup comprising an electricity measurement device and a multifunctional electric cable.

The invention can find application for transmitting signals from sensors that are used to measure various parameters, such as temperature, and installed in various devices and assemblies operating in harsh conditions, for control of equipment. The invention can be applied in the manufacture of heat-resistant and fire-resistant wires and cables with high performance, which can be exposed to extreme temperatures, as well as corrosive substances or atmospheres or fire and intended for use in extreme conditions, such as when drilling wells or developing fields, in industrial or military aerospace, marine applications, and automobile, rail, and public transport. The invention can be applied in cables for subscriber broadband access networks, Internet telephony, in the operation of cables on urban, corporate, rural and similar communication networks, including using digital subscriber line transmission systems - JV TsAL (xDSL). Also allowed the use of the invention in cables for signaling and blocking, waterproof, power and communication, and with increased mechanical protection.

### Background of the Invention

Typically, electrical cables are supplied wound around bobbins, along with information on the nominal length of the wound cable. However, in most cases, this information is not accurate and has a significant error, which leads to some negative consequences. At the same time, in order to find out the exact cable length, a laborious method of rewinding has to be used.

For some practical applications, such as downhole or underground cable bedding, it may be important to know the "real" cable length. Even small lengths, such as 1 m or less, especially when skipping, can result in some difficulties.

Common techniques to measure the length of an installed electrical cable include:
- a "DC method" based on measuring the resistance of a current carrying wire with the help of a milli-ohmmeter at direct current to deduce the cable length; and
- a "TDR method" based on measuring the cable length with a reflectometer by reflecting a signal impulse from an end of the cable.

DC methods are generally more accurate than TDR methods.

TDR methods can be applied when the wires are thick enough, but the measurement accuracy deteriorates with length increase. When measuring great cable lengths, of about several kilometers, measurement accuracy is reduced up to 5 to 10 or more meters. However, the TDR method is simpler to implement and convenient to visually output to the operator.

The usage of the abovementioned conventional methods requires expensive equipment and highly qualified staff, and for adequate computation of cable resistance into a value of cable length, it is necessary to know beforehand the exact value of cable resistance per unit length. If the exact value is not known, then the length is calculated based on the conductor cross section or diameter and material properties, which may lead to an unacceptably high measurement error. Moreover, as concerns the TDR method, it is not appropriate for measuring the length of a cable consisting of one wire.

In many applications, conventional cable length measurement methods can be used to detect malfunctions, in particular to detect when the cables or wires are broken.

A drawback of the abovementioned traditional methods for cable length measurement is that they cannot be applied for accurate measurement of installed cables or cables transported in rolls, especially due to very low cable resistance (0.002 Ohm/m).

An example of a known multifunctional cable containing main power wires and additional individual insulated wires is described in RU 2214635 C2. The additional wires solve the problem of cable self-heating however traditional cable measurement methods cannot accurately measure the length of an already installed cable because the resistance of the additional wire is negligibly small and leads to a measurement error of 30 % or more.

RU 186 328 U1 discloses a power cable with a heating element containing a conductive core, a first semiconducting shield over the core, an insulation, a second semiconducting shield over the insulation, a metal shield of copper wires over the second semiconducting shield, an electrically insulated heating element made of metal with an electrical resistivity not less than 0.9 Ohm mm2 / m and a nominal cross section of not more than 10.0 mm2, and an outer sheath.

CN 203 422 980 U discloses a 220 kV high-tension cable comprising some cable cores, a screen arranged on each cable core, a packed layer around the cable cores, the packed layer with the cable cores subsequently coated with a polyethylene layer, a watertight composition and a restrictive coating, wherein the restrictive coating is provided with two heating steel wires. US 2018/220494 A1 relates to a method for manufacturing a heating element, a heating element manufactured thereby, and a use method thereof, in which a plurality of ultrafine wires having a high resistance value are combined in a parallel structure such that the total areas thereof are brought into contact with each other, whereby each ultrafine wire has a high resistance value while a combined resistance value is reduced, thereby improving heat generating efficiency.

DE 36 35 518 A1 discloses a method for measuring the length of a cable, wherein a current of constant strength is passed through the cable and the voltage drop is measured over the length of the cable, wherein for correcting the temperature dependence of the cable resistance, the current is passed through a calibration cable of defined length, which has the same temperature as the cable to be measured, and wherein the length of the cable to be measured is obtained by multiplying the length of the calibration cable by the ratio of the voltages dropping across the cable to be measured and across the calibration cable.

CN 202 770 387 U relates to a portable cable length measuring instrument.

### Summary of the Invention

An object of the invention is to provide measurement setup comprising an electricity measurement device and a multifunctional cable which enables a cost effective yet accurate measurement of the cable length especially at long distances in the range of 10km or longer, after the cable is installed and which may follow nonlinear paths.

It is advantageous is to provide a multifunctional electrical cable which enables accurate length measurement, and that includes a self-heating option or a heating or anti-icing function.

Objects of the invention are achieved by a measurement set up according to claims 1 or 2 and a method of measurement according to claim 5. Dependent claims describe various advantageous features of embodiments of the invention.

In an embodiment, each conductor comprises an insulation layer and in addition the cable comprises an outer insulation layer, the insulated layers being made from a flexible polymer material of a single type.

According to the invention, said at least second conductor comprises a resistance of between 1 to 2 Ohm/m.

In an embodiment, said at least second conductor comprises a resistance of between 1.5 to 2 Ohm/m.

According to claim 2, the cable further comprises at least a third conductor, wherein one of the second and third conductor has a resistance per length at least a factor higher than the resistance per length of the other of the second and third conductors.

Also disclosed herein is a measurement method for measuring the length of a multifunctional electric cable, according to claim 5.

In an embodiment, a multimeter is used as an electricity measurement device.

### Brief description of the figures

The embodiments of the invention are illustrated in the figures where:
Fig.1 illustrates schematically a cross section of a cable with two main current carrying wires and with one additional wire according to the invention;
Fig.2 illustrates schematically a cross section of a cable with one main current carrying wire and with one additional wire according to the invention;
Fig.3 illustrates schematically a cross section of a cable with one main current carrying wire and with two additional wires according to the invention;
Fig.4 illustrates schematically a longitudinal cross section through line IV-IV of the cable of figures 1 or 2 with a wiring connection for the main and additional wires to measure a cable length according to claim 1 of the invention;
Fig.5 illustrates schematically a longitudinal cross section through line V-V of the cable of figure 3 with a wiring connection for two additional wires to measure a cable length wire according to claim 2 of the invention.

### Detailed Description of embodiments of the invention

Referring to the figures, a multifunctional electrical cable according to the invention comprises a first conductor 1 and at least a second conductor 3, 3a, 3b serving as a measurement conductor. The first conductor is insulatingly separated from the at least second conductor 3, 3a, 3b and any further conductors by at least one insulating layer 2, 4, 5. Each conductor 1, 3, 3a, 3b may be surrounded by an insulating layer 2, 4 and the plurality of conductors may be further surrounded by an outer layer 5 that may be an insulating layer or a reinforced layer for protection of the multifunctional cable.

The conductors 1, 3, 3a, 3b may be made of a single conducting wire, or of a plurality of conducting wires of a same or of different materials braided together, and may further comprise a core, for instance a steel core, to increase tensile strength of the cable. Various *per se* known conductor configurations may be provided.

The first conductor 1 may be a main conductor, typically with a low electrical resistance, in particular having an electrical resistance less than 0,1 ohm/m, typically less that 0.01 ohm/m, for instance in the range of 0.001 to 0.01 ohm. The at least second conductor has an electrical resistance per meter preferably at around ten times or more the resistance per meter of the first conductor.

In advantageous embodiment the second conductor has a resistance of between 0.1 ohm/m and 2 ohm/m. The at least second conductor forms a measurement conductor for measurement of the cable length and is connected at one end to a measuring circuit 6.

The measuring circuit 6 is connected to another conductor 1, 3 of the multifunctional cable.

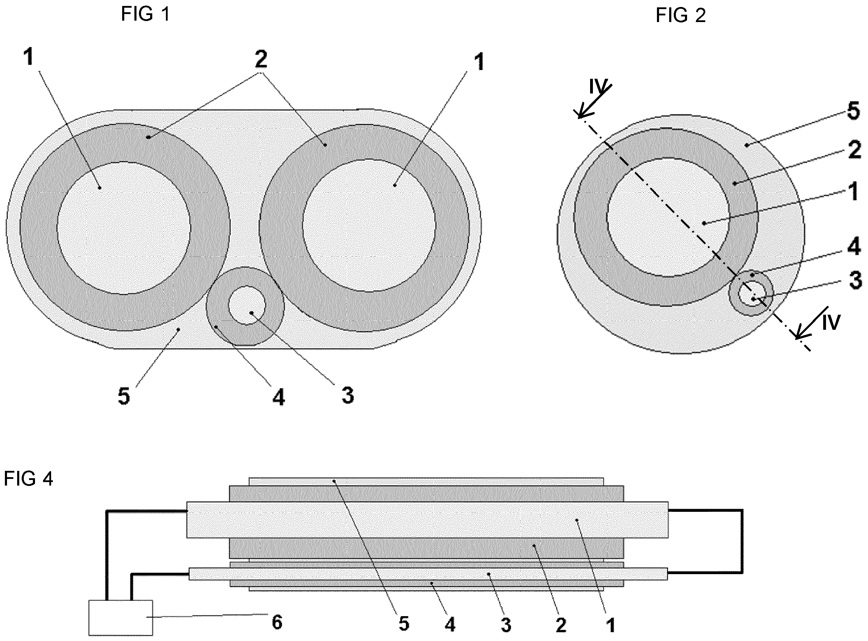

According to claim 1, as illustrated in figures 1, 2 and 4, the measuring circuit 6 is connected to a main conductor 1 with relatively low resistance per meter compared to the measurement (i.e. second) conductor 3. The other end of the main and measurement conductors 1,3 are connected in order to close the measuring circuit as illustrated in figure 4.

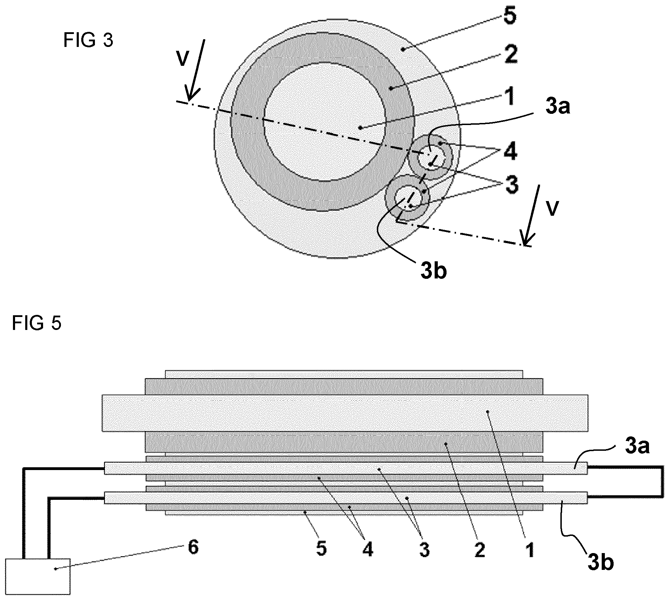

According to claim 2, illustrated in figures 3 and 5, the measuring circuit 6 is connected to the second conductor 3a and a third conductor 3b with relatively low resistance per meter compared to the second conductor 3a. The other end of the third and second measurement conductors 3a, 3b are connected together in order to close the measuring circuit as illustrated in figure 5.

If an electrical cable has conductors with a resistance of less than 0.1 Ohm/m, which is typical in many installations, accurate cable length measurement will be difficult to achieve, especially over long distances such as over 10km or more.

On the other hand, if a conductor has a resistance of more than 2 Ohm/m, there is a need to use more complicated measurement devices to measure the length, which is also accompanied by additional device inaccuracies in measuring the cable length.

With at least one conductor with a resistance of between 0.1 to 2 Ohm/m in the cable, it is possible at any time (before the installation in rolls, during installation, after installation), at any part of the cable length, to accurately measure the cable length. The cable length measurement accuracy may be for instance around 10 cm for a cable length of around 10km which means that the inaccuracy is around 0.01%.

An advantageous condition for the accurate measurement of cable length according to embodiment of the invention is to maintain an large difference in the resistances per distance of the connected conductors, namely the first (main) and second (measurement) conductors 1, 3 in the embodiment of figures 1, 2 and 4, or the second (measurement) and third (additional) conductors 3a, 3b of the embodiment of figures 3 and 5.

In case of measuring a length of a cable with an additional conductor 3b, the resistance of the additional conductor is preferably at least one factor higher than the resistance of the main current carrying cable wire, more preferably by the factor of about 10.

In situations where it is difficult to connect the main current carrying conductor 1 to the measurement circuit 6, for example, due to a very large cross section of the main conductor, the multifunctional cable may advantageously include an additional measurement conductor 3b with a different resistance per length compared to the measurement conductor 3a. In this case, the resistance of one measurement conductor 3a is preferably at least by one factor higher than the resistance of the other (second) additional measurement conductor, more preferably by a factor of 10.

The cable design, depending on the purpose and working conditions, can include different fillers, shields, additional insulation, water blocking, armored coatings, tapes. In addition, the cable design can contain several main conductors 1 as illustrated in figure 1 or several additional ones for instance for duplicating or control as illustrated in figures 3 and 5.

Cross sections of exemplary measurement wires 3, 3a, 3b are indicated in Table 1 below.

**Table 1 :**

| **Nº** | **conductor design** | **conductor material** | **conductor resistance (nominal), Ohm/m** | **Diameter, mm** |
|---|---|---|---|---|
| **1** | **5x0.21** | **copper** | **0.1** | **0.57** |
| **2** | **5x0.3** | **latten** | **0.2** | **0.81** |
| **3** | **5x0.25** | **latten** | **0.28** | **0.68** |
| **4** | **4x0.25** | **latten** | **0.36** | **0.6** |
| **5** | **10x0.25** | **galvanized steel** | **0.4** | **1** |
| **6** | **3x0.25** | **latten** | **0.47** | **0.54** |
| **7** | **2x0.3** | **latten** | **0.5** | **0.6** |
| **8** | **4x0.3** | **galvanized steel** | **0.7** | **0.72** |
| **9** | **5x0.25** | **galvanized steel** | **0.8** | **0.68** |
| **10** | **4x0.25** | **galvanized steel** | **1** | **0.6** |
| **11** | **3x0.5** | **stainless steel** | **1.2** | **1.08** |
| **12** | **3x0.25** | **galvanized steel** | **1.33** | **0.54** |
| **13** | **4x0.5** | **fechral** | **1.77** | **1.21** |
| **14** | **2x0.25** | **galvanized steel** | **2** | **0.5** |

The conductors in lines 1, 5, 7, 10, and 14 are preferred ones as they provide the easiest computation of measurement results into the actual length.

At least one measurement conductor 3, 3a, 3b with a resistance of between 0.1-2 Ohm/m enables one to measure the cable length easily and accurately at a distance of10 km and more.

According to claim 5, a method for cable length measurement with at least one additional conductor presupposes that from one end of the electric cable, the end of one main current carrying conductor 1 and the end of one additional conductor 3 are connected to the electricity measurement device 6, at the other end of the electric cable, the other end of the same main current carrying conductor 1 is connected with the other end of the same additional conductor 3, and the resistance of the obtained circuit is measured by an electricity measurement device 6 with further calculation of the obtained resistance value into the cable length.

When the main conductor 1 and additional conductor 3 are connected from one end of the cable to the measurement device at short-circuiting (connecting) of the same main conductor 1 and the same additional conductor 3 at the other end of the cable, the measurement device 6 will show the circuit resistance of the main conductor 1 and additional conductor 3. Since the resistance of the main conductor 1 is negligibly small, thus the device 6 shows actual resistance of the additional conductor 3.

According to claim 5 of the invention, a method for measuring the length of the cable containing at least two additional conductors is configured such that from one end of the electric cable, the end of one additional conductor and the end of the other additional conductor are connected to the electricity measurement device 6, at the other end of the electric cable, the other end of the same one additional conductor is connected with the other end of the same additional conductor and the resistance of the obtained circuit is measured by the electricity measurement device 6 with further mathematical calculation of the obtained resistance value into the cable length.

The resistance of the additional conductor 3 may vary from 0.1 to 2 Ohm/m, while the resistance of the main current carrying conductor 1 does not typically exceed 0.001-0.01 Ohm/m at larger cross sections. The insulated coating 2, 4, 5 of the coating and the cable form a flexible polymer material that contributes to the stabilization of the above mentioned circuit (with no closures and interruptions) and insulation of the conductor 1, 3 from each other, as well as for the integrity and water tightness when they are installed with curves.

Since the resistance of the additional conductor 3 at cable manufacturing is maintained within the specified parameters, this enables one to know the exact resistance value for a cable meter, while at measuring, no highly qualified staff is required for simple mathematical calculations of the obtained resistance towards the resistance value of the cable length unit. Since the claimed length measurement methods presuppose that the average values of the resistance in a circuit are measured, thus no expensive measurement equipment to measure small resistance values are required, and a simple multimeter will do.

A trial batch of cables according to embodiments of the invention were used at experimental measurement of the average (more than 3 km) and longer length (more than 30 km) of cables by different methods.

Experimental measurements of the length showed the highest efficiency, simplicity and accuracy of the claimed methods of cable length measurements at different straight cross sections of the main wires with different resistance (0.1-2 Om/m) and the number of the additional wires at different cable length.

In particular, the resistance of the additional wires from 1 to 2 Om/m gives the highest accuracy in measuring the length. Along with that, it is easier and more convenient to calculate the cable length with the additional wires having a resistance from 1.5 to 2 Ohm/m.

To highlight the multifunctionality of the electric cable it should be noted that the additional conductor 3 of the cable can be used for warming up the cable, for example, in case of long-term storage of the cable in cold conditions. In this case it is required to select a specific voltage for short-circuiting from a Table. One can use a special device which automatically detects the resistance of the measurement-heating wire and automatically generates the required voltage by selecting the required transformer winding. It can also automatically determine the required warming-up time. The additional conductor 3 can also be used to warm up the overhead cables in case of icing by using the abovementioned short-circuiting method.

## Claims

1. A measurement setup comprising an electricity measurement device and a multifunctional electric cable including at least a first main current carrying conductor (1), **characterized in that** said multifunctional electric cable comprises at least a second conductor (3, 3a, 3b) serving as a measurement conductor and at least one insulation layer (2, 4, 5) separating the at least first main current carrying conductor (1) from the at least one second conductor (2, 4, 5), and **in that** said at least second conductor comprises a resistance per length in a range of 1 to 2 Ohm/m, said resistance per length being at least one factor higher than the resistance per length of the main current carrying conductor, wherein at one end of the electric cable, an end of said at least one main current carrying conductor (1) and an end of said at least one second conductor (3, 3a, 3b) are connected to the electricity measurement device (6), and at the other end of the electric cable, the other end of the main current carrying conductor (1) is connected with the other end of the second conductor (3, 3a, 3b).

2. A measurement setup comprising an electricity measurement device and a multifunctional electric cable including at least a first main current carrying conductor (1), **characterized in that** said multifunctional electric cable comprises at least a second conductor (3, 3a, 3b) serving as a measurement conductor and at least one insulation layer (2, 4, 5) separating the at least first main current carrying conductor (1) from the at least one second conductor (2, 4, 5), and **in that** said at least second conductor comprises a resistance per length in a range of 1 to 2 Ohm/m, said resistance per length being at least one factor higher than the resistance per length of the main current carrying conductor, further comprising at least a third conductor (3b), wherein one of the second and third conductor has a resistance per length at least a factor higher than the resistance per length of the other of the second and third conductors, wherein at one end of the electric cable, an end of the second conductor (3a) and an end of the third conductor (3b) are connected to the electricity measurement device (6), while at the other end of the electric cable, the other end of the second conductor is connected with the other end of the third conductor.

3. The measurement setup according to claim 1 or 2, wherein each conductor (1, 3, 3a, 3b) comprises an insulation layer (2, 4) and in addition the cable comprises an outer insulation layer 5, the insulated layers being made from a flexible polymer material of a single type.

4. The measurement setup according to claim 3, wherein said at least second conductor comprises a resistance per length between 1.5 and 2 Ohm/m.

5. A measurement method for measuring the length of a multifunctional electric cable with the measurement setup according to any preceding claim, wherein the resistance of the obtained circuit is measured by said electricity measurement device with a further calculation of an obtained resistance value into a cable length.

6. The method according to claim 5, wherein a multimeter is used as an electricity measurement device.

## Patentansprüche

1. Messanordnung, die eine Elektrizitätsmessvorrichtung und ein multifunktionales elektrisches Kabel umfasst, das mindestens einen ersten Hauptstrom führenden Leiter (1) umfasst, **dadurch gekennzeichnet, dass** das multifunktionale elektrische Kabel mindestens einen zweiten Leiter (3, 3a, 3b), der als ein Messleiter dient, und mindestens eine Isolierschicht (2, 4, 5) umfasst, die den mindesten einen ersten Hauptstrom führenden Leiter (1) von dem mindestens einen zweiten Leiter (2, 4, 5) trennt, und dadurch, dass der mindestens eine zweite Leiter einen Widerstandsbelag in einem Bereich von 1 bis 2 Ohm/m umfasst, wobei der Widerstandsbelag mindestens einen Faktor höher ist als der Widerstandsbelag des Hauptstrom führenden Leiters, wobei an mindestens einem Ende des elektrischen Kabels ein Ende des mindestens einen Hauptstrom führenden Leiters (1) und ein Ende des mindestens einen zweiten Leiters (3, 3a, 3b) mit der Elektrizitätsmessvorrichtung (6) verbunden sind und an dem anderen Ende des elektrischen Kabels das andere Ende des Hauptstrom führenden Leiters (1) mit dem anderen Ende des zweiten Leiters (3, 3a, 3b) verbunden ist.

2. Messanordnung, die eine Elektrizitätsmessvorrichtung und ein multifunktionales elektrisches Kabel umfasst, das mindestens einen ersten Hauptstrom führenden Leiter (1) umfasst, **dadurch gekennzeichnet, dass** das multifunktionale elektrische Kabel mindestens einen zweiten Leiter (3, 3a, 3b), der als ein Messleiter dient, und mindestens eine Isolierschicht (2, 4, 5) umfasst, die den mindesten einen ersten Hauptstrom führenden Leiter (1) von dem mindestens einen zweiten Leiter (2, 4, 5) trennt, und dadurch, dass der mindestens eine zweite Leiter einen Widerstandsbelag in einem Bereich von 1 bis 2 Ohm/m umfasst, wobei der Widerstandsbelag mindestens einen Faktor höher ist als der Widerstandsbelag des Hauptstrom führenden Leiters, und ferner mindestens einen dritten Leiter (3b) umfasst, wobei einer von dem zweiten und dritten Leiter einen Widerstandsbelag aufweist, der mindestens einen Faktor höher ist als der Widerstandsbelag des anderen von dem zweiten und dem dritten Leiter, wobei an einem Ende des elektrischen Kabels ein Ende des zweiten Leiters (3a) und ein Ende des dritten Leiters (3b) mit der Elektrizitätsmessvorrichtung (6) verbunden sind, während an dem anderen Ende des elektrischen Kabels das andere Ende des zweiten Leiters mit dem anderen Ende des dritten Leiters verbunden ist.

3. Messanordnung nach Anspruch 1 oder 2, wobei jeder Leiter (1, 3, 3a, 3b) eine Isolierschicht (2, 4) umfasst und darüber hinaus das Kabel eine äußere Isolierschicht 5 umfasst, wobei die Isolierschichten aus einem flexiblen Polymer eines einzigen Typs bestehen.

4. Messanordnung nach Anspruch 3, wobei der mindestens eine zweite Leiter einen Widerstandsbelag von zwischen 1,5 und 2 Ohm/m umfasst.

5. Messverfahren zum Messen der Länge eines multifunktionalen elektrischen Kabels mit der Messanordnung nach einem der vorhergehenden Ansprüche, wobei der Widerstand der erhaltenen Schaltung durch die Elektrizitätsmessvorrichtung mit einer weiteren Berechnung eines erhaltenen Widerstandswerts in eine Kabellänge gemessen wird.

6. Verfahren nach Anspruch 5, wobei ein Multimeter als eine Elektrizitätsmessvorrichtung verwendet wird.

## Revendications

1. Configuration de mesure comprenant un dispositif de mesure d'électricité et un câble électrique multifonctionnel comportant au moins un premier conducteur principal porteur de courant (1), **caractérisée en ce que** ledit câble électrique multifonctionnel comprend au moins un deuxième conducteur (3, 3a, 3b) servant de conducteur de mesure et au moins une couche d'isolation (2, 4, 5) séparant l'au moins un premier conducteur principal porteur de courant (1) de l'au moins un deuxième conducteur (2, 4, 5), et **en ce que** ledit au moins un deuxième conducteur comprend une résistance par longueur dans une plage entre 1 et 2 Ohm/m, ladite résistance par longueur étant plus élevée d'au moins un facteur que la résistance par longueur du conducteur principal porteur de courant, dans laquelle à une extrémité du câble électrique, une extrémité dudit au moins un conducteur principal porteur de courant (1) et une extrémité dudit au moins un deuxième conducteur (3, 3a, 3b) sont connectées au dispositif de mesure d'électricité (6), et à l'autre extrémité du câble électrique, l'autre extrémité du conducteur principal porteur de courant (1) est connectée à l'autre extrémité du deuxième conducteur (3, 3a, 3b).

2. Configuration de mesure comprenant un dispositif de mesure d'électricité et un câble électrique multifonctionnel comportant au moins un premier conducteur principal porteur de courant (1), **caractérisée en ce que** ledit câble électrique multifonctionnel comprend au moins un deuxième conducteur (3, 3a, 3b) servant de conducteur de mesure et au moins une couche d'isolation (2, 4, 5) séparant l'au moins un premier conducteur principal porteur de courant (1) de l'au moins un deuxième conducteur (2, 4, 5), et **en ce que** ledit au moins un deuxième conducteur comprend une résistance par longueur dans une plage entre 1 et 2 Ohm/m, ladite résistance par longueur étant plus élevée d'au moins un facteur que la résistance par longueur du conducteur principal porteur de courant, comprenant en outre au moins un troisième conducteur (3b), dans laquelle l'un des deuxième et troisième conducteurs a une résistance par longueur plus élevée d'au moins un facteur que la résistance par longueur de l'autre des deuxième et troisième conducteurs, dans laquelle à une extrémité du câble électrique, une extrémité du deuxième conducteur (3a) et une extrémité du troisième conducteur (3b) sont connectées au dispositif de mesure d'électricité (6), tandis qu'à l'autre extrémité du câble électrique, l'autre extrémité du deuxième conducteur est connectée à l'autre extrémité du troisième conducteur.

3. Configuration de mesure selon la revendication 1 ou 2, dans laquelle chaque conducteur (1, 3, 3a, 3b) comprend une couche d'isolation (2, 4) et le câble comprend en plus une couche d'isolation extérieure (5), les couches isolées étant réalisées en un matériau polymère flexible d'un seul type.

4. Configuration de mesure selon la revendication 3, dans laquelle ledit au moins un deuxième conducteur comprend une résistance par longueur entre 1,5 et 2 Ohm/m.

5. Procédé de mesure pour mesurer la longueur d'un câble électrique multifonctionnel avec la configuration de mesure selon l'une des revendications précédentes, dans lequel la résistance du circuit obtenu est mesurée par ledit dispositif de mesure d'électricité avec un calcul supplémentaire d'une valeur de résistance obtenue en une longueur de câble.

6. Procédé selon la revendication 5, dans lequel un multimètre est utilisé comme dispositif de mesure d'électricité.
